# EUROPEAN PATENT SPECIFICATION

(11) **EP 3 482 616 B1**
(45) Date of publication and mention of the grant of the patent: **19.08.2020**
(21) Application number: 18205285.2
(22) Date of filing: 08.11.2018
(51) Int. Cl.: A01C 7/04

(54) **DEVICE FOR DISTRIBUTING SEEDS**
VORRICHTUNG ZUM VERTEILEN VON SAATGUT
DISPOSITIF DE DISTRIBUTION DE SEMENCES

(30) Priority: 10.11.2017 IT 201700128806
(43) Date of publication of application: 15.05.2019
(73) Proprietor: ROTER ITALIA S.r.l., 46035 Ostiglia (MN) (IT)
(72) Inventor: FORIGO, Alberto, Ostiglia (MN) (IT)
(74) Representative: Gallo, Luca

(56) References cited:
- DE-B- 1 138 269
- US-A- 667 386
- US-A- 711 996
- US-A- 1 358 747
- US-A- 3 065 879

## Description

### Field of application

The present invention regards a device for distributing seeds for a sowing machine, in accordance with the preamble of the independent claim No. 1.

The present machine is inserted in the context of the industrial field of production of farming machines and it is advantageously intended to be connected to a tractor in order to be driven over the ground intended to receive the seeds.

The present sowing machine is of precision type, adapted to precisely deposit doses of seeds on the ground, aligned along a direction substantially parallel to the advancing direction of the tractor.

The distribution device, object of the present invention, is advantageously intended to be installed in a sowing machine in order to distribute doses of seeds to distribution lips of the latter, in order to allow the precise deposition of the seeds themselves.

Therefore, the distribution device, object of the present invention, advantageously has use in the industrial field of production of sowing machines for cultivations, for example vegetable cultivations.

### State of the art

In the field of production of farming machines, sowing machines for distributing seeds on the ground in an automated manner have been known for some time. Such sowing machines are mechanically connectable, in a removable manner, to drive machines, normally farming tractors, in order to be driven on the ground intended to host the seeds to be distributed.

As is known, the sowing machines are adapted to distribute the seeds on the ground, aligning them along one or more tracks that are substantially parallel to each other and parallel to the advancing direction of the tractor.

The sowing machines of known type are provided with a support frame mechanically connectable to the tractor, with a hopper supported by the support frame intended to contain the seeds to be distributed and with at least one wheel rotatably and idly mounted on the support frame itself, susceptible of rotating on the ground via rolling friction and supporting the sowing machine during the sowing operations, driven by the tractor, on farming terrain in particular terrain treated by means of mulching.

As is known, with the technical term "mulching" it is intended covering the ground with at least one layer of protection material (e.g. by means of covering the ground with a sheet of plastic material or with a bark layer), in order to prevent the growth of weeds, or more generally to protect the ground from external agents and maintain the properties thereof without requiring further treatments.

In the industrial field of production of farming machines, sowing machines have been known for some time that are, in the technical jargon of the field, normally termed precision sowing machines or "monogerm" sowing machines.

Such sowing machines are normally provided with a distribution disc rotatably mounted on the support frame around a substantially horizontal axis. Such disc bears, mounted thereon, a plurality of distribution lips placed in flow connection with the hopper supported by the frame.

The lips are radially arranged and terminate at the external edge of the distribution disc, and are extended at least for a terminal section thereof outside the disc itself.

Such terminal section of each of the distribution lips is intended to be cyclically at least partially immersed in the ground in order to lay a corresponding dose of seeds that are coming from the hopper in the ground.

In order to distribute the seeds coming from the hopper to the distribution lips, in the technical field of production of sowing machines, devices are known for distributing seeds for sowing machines normally comprising a rotor peripherally provided with a plurality of equidistant cells along the circumferential path of the lateral face of the rotor, each adapted to contain a dose of seeds to be distributed. The device of known type also comprises a stator, fixed to the frame of the sowing machine and placed externally around the rotor.

More in detail, the stator of the device of known type is provided with at least one first opening in order to cyclically feed the cells of the rotor with doses of seeds, and a second opening in order to receive the doses of seeds from the cells themselves during the rotation of the rotor and cyclically discharge them, at the distribution lips fixed to the distribution disc.

In operation, the seeds contained in each cell, provided by the hopper through the first opening made on the stator, complete at least one circular arc during the rotation of the rotor before being discharged in one of the distribution lips when they reach the second opening made on the stator.

Some examples of these distribution devices of known type are described in the patents DE 1138269, US 711,996, US 667,386, US 3,065,879 and US 1,358,747. The device for distributing seeds for a sowing machine of the above-described known type has in practice shown that it does not lack drawbacks.

The main drawback lies in the fact that the seeds - after having been housed in the cell and due to the rotation of the rotor - sustain a guillotine effect when they reach the edge of the stator which defines the first opening and some of the aforesaid seeds are broken or in any case are damaged.

With the term "guillotine effect" it is intended the impact that the seeds sustain against the edge of the stator which defines the opening through which the seeds are inserted in each cell, since the seeds are thrust by the rotor itself and can at least partially exit outward from the cell and impact the aforesaid edge.

As is known, broken or damaged seeds do not germinate, considerably decreasing the yield of the sowing operation.

Therefore, the devices of known type do not ensure a high sowing yield, since some of the seeds set in the cells of the rotor are damaged due to the aforesaid guillotine effect against the wall of the stator that defines the first opening.

### Presentation of the invention

The main object of the present invention is therefore to overcome the drawbacks manifested by the solutions of known type, by providing a device for distributing seeds for a sowing machine which ensures a high sowing yield, avoiding the breakage of the seeds before the sowing itself.

Another object of the present invention is to provide a device for distributing seeds for a sowing machine that is entirely functional and reliable.

Another object of the present invention is to provide a device for distributing seeds for a sowing machine that is long-lasting and does not require frequent maintenance operations The invention is defined by the appended claims, i.e. by the independent claim 1.

### Brief description of the drawings

The technical characteristics of the finding, according to the aforesaid objects, can be clearly seen in the contents of the below-reported claims and the advantages thereof will be more evident from the following detailed description, made with reference to the enclosed drawings, which represent a merely exemplifying and non-limiting embodiment of the invention in which:

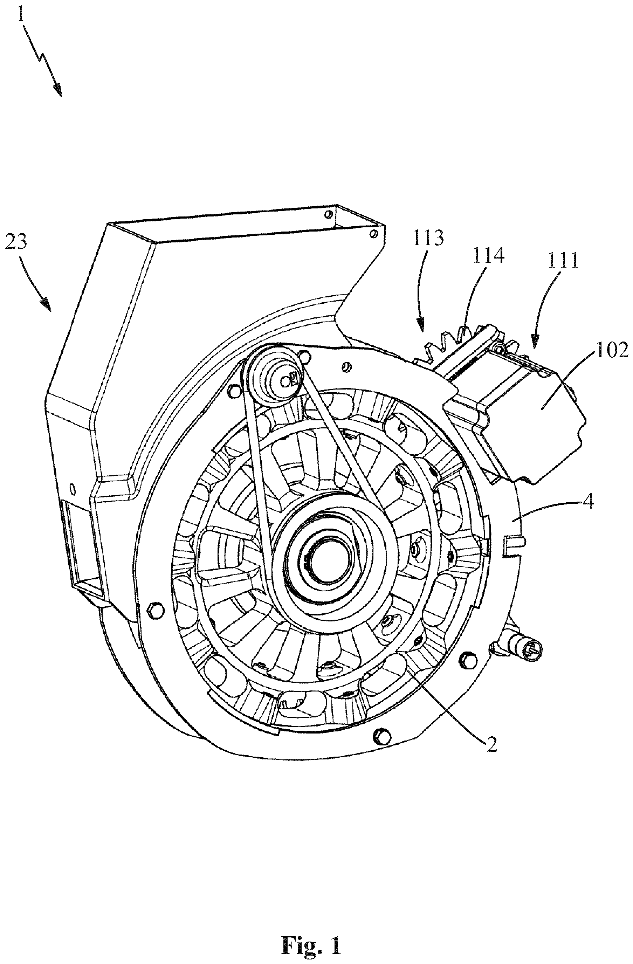

- figure 1 shows a front perspective view of a device for distributing seeds for a sowing machine, object of the present invention;

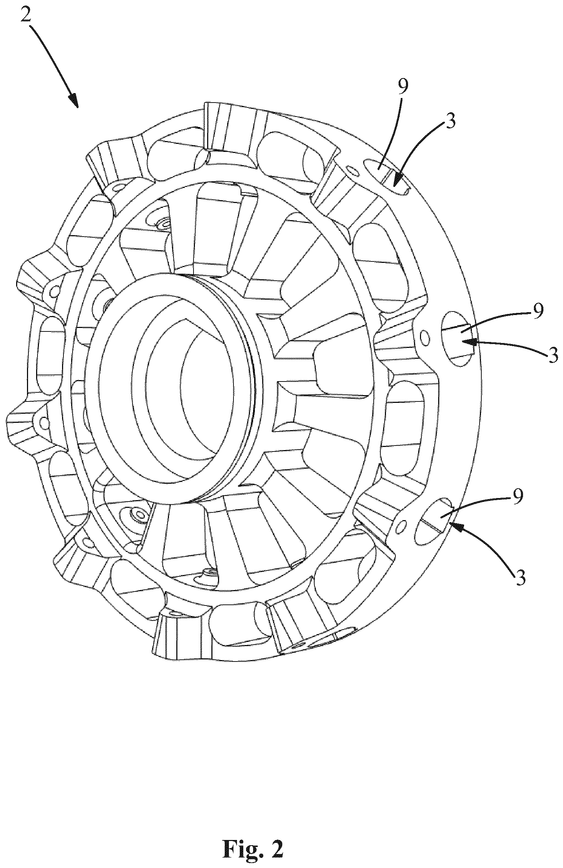

- figure 2 shows a perspective view of a rotor of the device for distributing seeds for a sowing machine, object of the present invention;
- figure 3 shows a perspective view of the rotor of the device for distributing seeds for a sowing machine, object of the present invention, and a detail regarding a cell of the rotor itself;

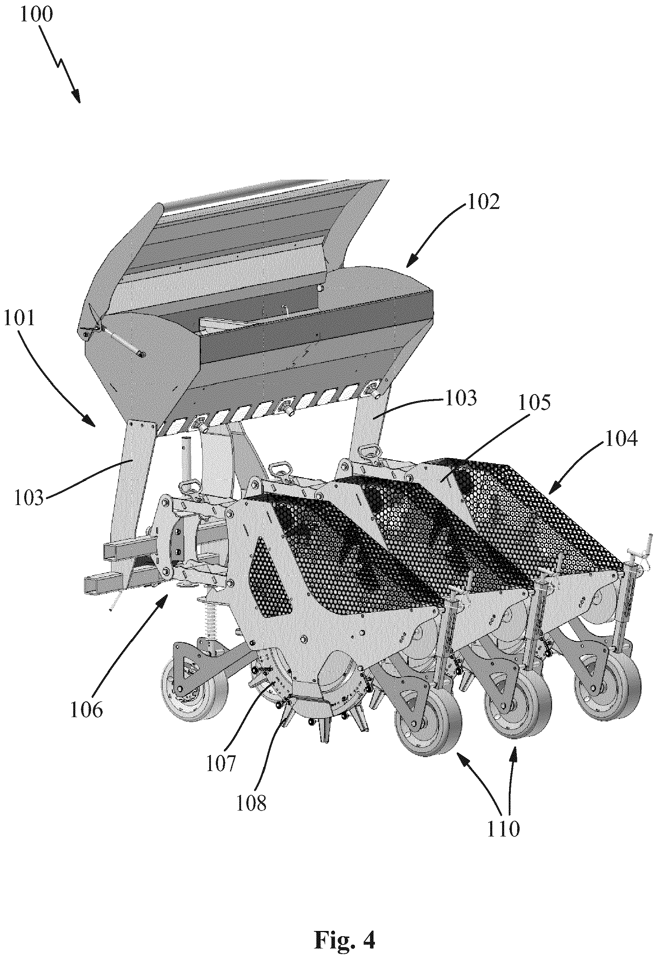

- figure 4 shows a perspective view of a sowing machine equipped with the device for distributing seeds, object of the present invention;

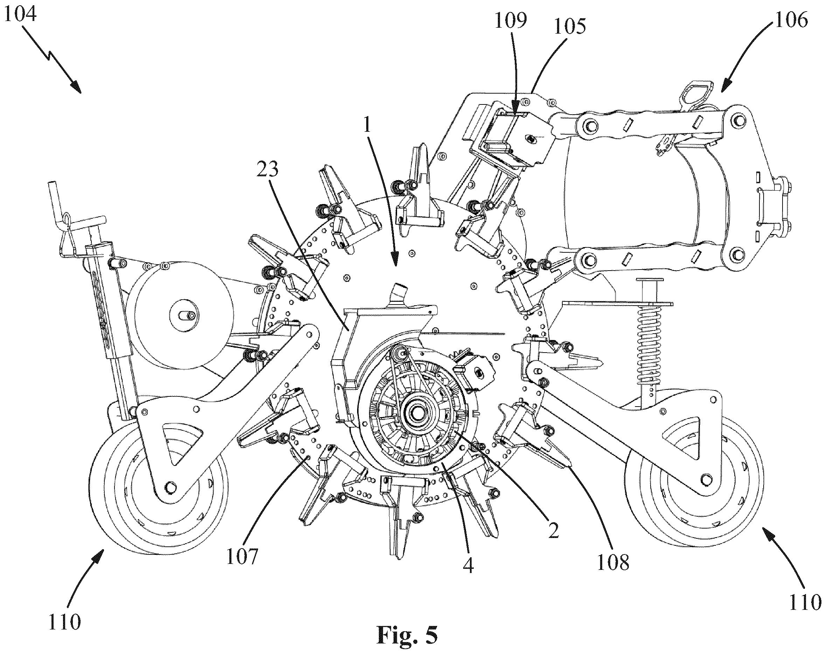

- figure 5 shows a lateral perspective view of a sowing unit of the sowing machine equipped with the device for distributing seeds, object of the present invention, with some parts removed in order to better illustrate other parts;

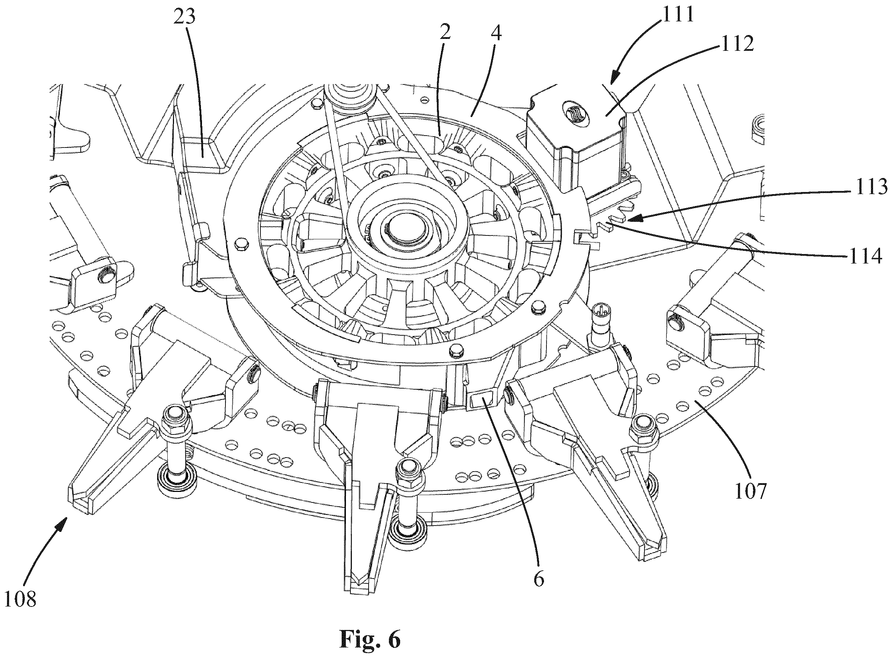

- figure 6 shows a detail of the sowing unit of the sowing machine equipped with the device for distributing seeds, object of the present invention, regarding the device itself.

### Detailed description of a preferred embodiment

With reference to the set of drawings, reference number 1 overall indicates the device for distributing seeds for a sowing machine, object of the present invention.

The sowing machine equipped with the distribution device, object of the invention, is intended to be fixed to a tractor, such as a tractor with wheels or with tracks of farming type, in order to distribute seeds over farming terrain for future cultivations, for example vegetable cultivations.

With the term "seeds" it must be intended hereinbelow any type of seed that is susceptible of being laid on or in the ground in order to germinate and grow at least one plant of any type, purpose and nature.

Normally, the present seeds are in the form of grains and are laid in the ground at a depth of several centimeters, e.g. a depth comprised between 2 and 10 cm. According to the invention, the seed distribution device 1 for a sowing machine comprises a rotor 2 peripherally provided with a plurality of equidistant cells 3, each adapted to contain a dose of seeds to be distributed.

The distribution device 1 also comprises a stator 4 placed externally around the rotor 2 and provided with at least one first opening 5 in order to cyclically feed the cells 3 with doses of seeds, and a second opening 6 in order to receive the doses of seeds from the cells 3 and to cyclically discharge them.

Advantageously, the stator 4 is mechanically fixable to a support frame 101 of the sowing machine 100.

In accordance with the preferred embodiment illustrated in the enclosed figures, the device 1 comprises at least one manifold 23 mechanically associated with a first opening of the stator 4 intended to be placed in connection with a hopper 102 for containing seeds of the machine 100 and cyclically with the cells 3 of the rotor 2 in order to transfer the doses of seeds to be distributed thereto. According to the idea underlying the present invention, the distribution device 1 comprises an elastically pliable bottom wall 7 inserted within each cell 3. According to the invention, for such purpose, elastic means 8 are provided for connecting the bottom wall 7 to the rotor 2.

In operation, upon rotating the rotor 2, the seeds contained in the cell 3 above the bottom wall 7 - when they reach one edge of the stator 4 defining the first opening 5 - push the bottom wall 7 radially towards the center of the rotor 2 itself, without being damaged.

More in detail, the seeds rotated by the rotor 2 impact the stator and in particular the edge which defines the first opening 5, forming a layer of seeds between the stator 4 and the rotor 2. Such layer of seeds pushes the bottom wall 7 which contains them radially towards the rotation axis of the rotor 2 itself.

In this manner, the distribution device 1, object of the present invention, allows maintaining a high sowing yield since substantially no seed is damaged, interfering with the stator 4 after having been within one of the cells 3 of the rotor 2.

Advantageously, the rotor 2 of the device 1 is provided with a rotation axis orthogonal to the advancing direction of the sowing machine 100 and in particular it is substantially horizontal.

The rotor 2 is advantageously provided with preferably circular external surface extended around its rotation axis.

In particular, the external surface of the rotor is extended over the entire thickness of the rotor parallel to the rotation axis.

In accordance with the preferred embodiment illustrated in the enclosed figures, the cells 3 are made on the external face 15 of the rotor 2, preferably arranged equidistant around the rotation axis.

Advantageously, each cell 3 is made in a depression on the external face 15 of the rotor 2 and is provided with a lateral wall 9 extended, preferably radially, between an end stop wall 11 and a frontal opening, from which the seeds are susceptible of entering into the cell 3 itself. The lateral 9 and end stop 11 walls of the cell 3 delimit a seat in which the bottom wall 7 is slidably inserted.

Each bottom wall 7 is preferably provided with an external face 15, susceptible of receiving the seeds, and with an internal face directed towards the rotation axis of the rotor 2.

In particular the bottom wall 7 comprises a movable body extended between its internal face and its external face 15 and is laterally delimited by a lateral surface slidable along the lateral wall 9 of the cell 3.

Advantageously, the elastic means 8 comprise a spring 19 interposed between the bottom wall 7 and the end stop wall 11 of the cell 3 facing the bottom wall 7 and in particular the internal face of the latter.

The bottom wall 7 inserted in each cell 3 of the rotor 2, and in particular the external face 15 of the bottom wall 7, of the device 1 defines, together with a lateral wall 9 of the cell 3 itself, a metering chamber 10 for containing the seeds. Advantageously, the bottom wall 7 is provided with a through hole 12 traversed by at least one screw 13 engaged in a nut screw 14 made on the end stop wall 11 of the cell 3, in order to adjust the depth of the cell 3 itself.

Advantageously, the through hole 12 is radially extended in a through manner between the aforesaid external face 15 and the internal face of the bottom wall 7. In accordance with the preferred embodiment illustrated in the enclosed figures, the screw 13 is provided with a head 22 accessible from the metering chamber 10 and actuatable by means of an adjustment instrument, moving the screw 13 in the nut screw 14 in order to vary the volume of the metering chamber 10.

In particular the head 22 of the screw 13 is susceptible of receiving the bottom wall 7 in abutment, and in particular a projecting shoulder extended into the through hole 12, acting as end stop for limiting the radial movement of the bottom wall 7 away from the rotation axis of the rotor 2.

The adjustment instrument for the screw 13 consists for example of a screwdriver, or, with particular reference to the embodiment illustrated in the enclosed figures, an Allen wrench.

Of course, for the purpose of moving the screw 13 in the nut screw 14, any adjustment instrument can be used that is per se known to the man skilled in the art, without departing from the scope of the present patent.

In this manner, the device 1, object of the present invention, allows a quick and easy variation of the volume of the metering chamber 10 in order to house a different volume of seeds within each cell 3 of the rotor 2, e.g. based on the different cultivation which the user wishes to attain.

Preferably, in order to lock the spring 19 in position, such spring 19 is of spiral type, and is provided with a terminal ring wound around an annular shoulder 20 projecting from the internal face 21 of the bottom wall 7 facing the end stop wall 11.

Advantageously, in addition, the spiral spring 19 is wound around the stem of the screw 13.

In accordance with the preferred embodiment illustrated in the enclosed figures, the external face 15 of the bottom wall 7, directly radially towards the exterior of the cell 3, is provided with a concavity 25 tilted towards the rotation sense of said rotor 2.

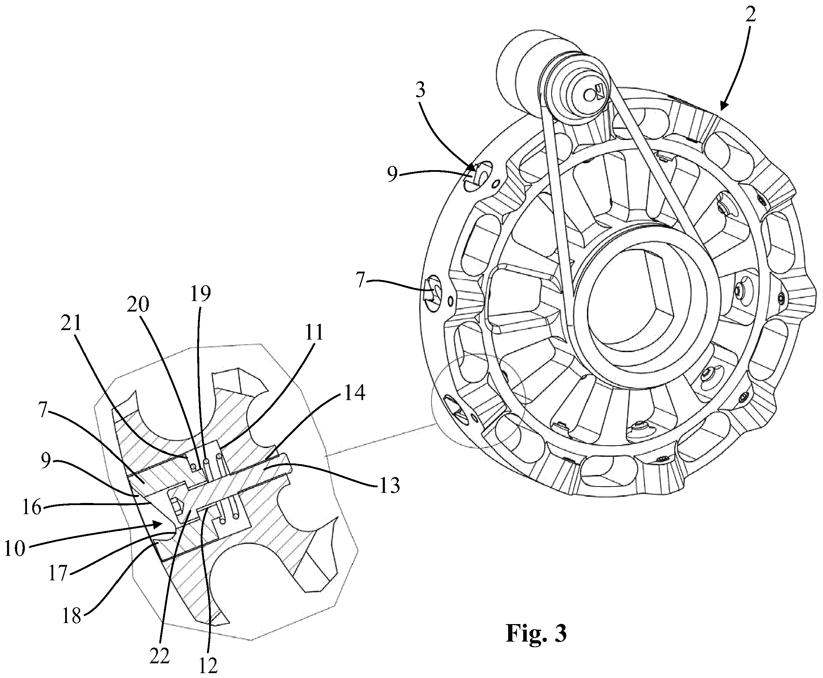

With particular reference to the non-limiting embodiment illustrated in the enclosed figure 3, the rotation sense is clockwise.

Advantageously, the external face 15 of the bottom wall 7 is provided with a slide portion 16 extended tilted with respect to a tangent of the rotor 2 by an angle comprised between 15° and 60° in order to allow an easy entrance of said dose of seeds.

In addition, the bottom wall 7 preferably comprises a collection portion 17 connected to the slide portion 16 by means of at least one bend in order to form the metering chamber 10 intended to contain the seeds.

Preferably, the bottom wall 7 also comprises an undercut portion 18 connected to the collection portion 17 by means of at least one bend in order to prevent the exit of the seeds from the metering chamber 10 of the cell 3.

The distribution device 1, object of the present invention, described up to now is advantageously employable in a sowing machine 100 of the type described hereinbelow.

The sowing machine 100 comprises a support frame 101 intended to be fixed to a tractor at connection points.

In accordance with the preferred embodiment illustrated in the enclosed figures, the connection points are of three-point attachment type, per se known to the man skilled in the art and therefore not described in detail hereinbelow.

The sowing machine 100 also comprises at least one hopper 102 for containing seeds to be distributed supported by the support frame 101.

In operation, the containment hopper 102 is intended to contain the seeds to be distributed and to be filled before starting the sowing by means of the sowing machine 1, object of the present invention.

Advantageously, the containment hopper 102 is supported in raised position and is sustained by at least two substantially vertical uprights 103.

The sowing machine 1 comprises at least one sowing unit 104, each provided with a support structure 105, which is advantageously mechanically connected to the support frame 101 of the sowing machine 100 by means of connection means 106.

The sowing machine 100 is advantageously employable for precisely distributing the seeds in aligned holes made on the ground, in particular for vegetable cultivation.

Advantageously, the sowing machine 100 is employable for distributing seeds on the ground treated by means of mulching, i.e. on which a layer of protection material was previously arranged, such as a sheet of plastic material, or a sheet of biofilm or a layer of bark chips, in order to protect the ground itself from external agents and prevent the formation of weeds.

Preferably, the sowing units 104 are connected to the support frame 101 and are substantially side-by-side in order to form parallel strips of precisely-deposited seeds, parallel to the advancing direction of the tractor to which the sowing machine 1, object of the present invention, is fixed.

In accordance with the embodiment illustrated in the enclosed figures, the sowing machine 100 comprises three sowing units 104 and the connection means 106 consist of an articulated quadrilateral and in particular in an articulated parallelogram.

The sowing machine 100 also comprises at least one distribution disc 107 rotatably mounted on the support structure 105 in a position raised from the ground and peripherally bearing, mounted thereon, a plurality of equidistant distribution lips 108.

More in detail, the distribution disc 107 is placed in a substantially central position of the support structure 105 of each sowing unit 104 and is preferably made of metal material.

The sowing machine 1 also comprises the distribution device 1, object of the present invention, mounted on the support structure 105 connected to the hopper 102 in order to receive the seeds therefrom, and cyclically in communication with the distribution lips 108 in order to release a dose of the seeds at their interior.

The sowing machine 100 also comprises first motorization means 109 connected to the distribution disc 107 in order to rotate it around a rotation axis substantially orthogonal to the advancing direction of the sowing machine 100. The sowing machine 100 also comprises at least one positioning wheel 110 idly mounted on the support structure 6, which defines the height of said sowing unit 104 with respect to the ground.

The sowing machine 100 also comprises second motorization means 111 connected to the rotor 2 of the distribution device 1 in order to rotate it inside the stator 4 so as to cyclically face the cells 3 of the rotor 11 itself at the first opening 5.

Advantageously, the second motorization means 111 comprise at least one motor 112 fixed to the support structure 105. In addition, transmission means 113 are provided that are connected to the motor 112 and to the rotor 2 in order to rotate the latter.

In accordance with the preferred embodiment illustrated in the enclosed figures, the transmission means 113 comprise a first toothed wheel peripherally fixed to the rotor 2 and a second toothed wheel 114 fit to the shaft of the motor 112 and mechanically engaged to the first toothed wheel.

The invention thus described therefore attains the pre-established objects.

## Claims

1. Device for distributing seeds for a sowing machine, which comprises:
- a rotor (2) peripherally provided with a plurality of equidistant cells (3), each adapted to contain a dose of seeds to be distributed;
- a stator (4) placed externally around said rotor (2) and provided with at least one first opening (5) in order to cyclically feed said cells (3) with doses of seeds, and a second opening (6) in order to receive said doses of seeds from said cells (3) and to cyclically discharge them;
said distribution device being **characterized in that** it comprises an elastically pliable bottom wall (7) inserted within said cell (3); elastic means (8) being provided for connecting said bottom wall (7) to said rotor (2); said bottom wall (7) defining, together with a lateral wall (9) of said cell (3), a metering chamber (10) for containing said seeds.

2. Device for distributing seeds on the ground according to claim 1, **characterized in that** said elastic means (8) comprise a spring (19) interposed between said bottom wall (7) and an end stop wall (11) of said cell (3) facing said bottom wall (7).

3. Device for distributing seeds on the ground according to claim 2, **characterized in that** said bottom wall (7) is provided with a through hole (12) traversed by at least one screw (13) engaged in a nut screw (14) made on said end stop wall (11) of said cell (3), in order to adjust the depth of said cell (3).

4. Device for distributing seeds on the ground according to any one of the preceding claims, **characterized in that** said bottom wall (7) is provided with an external face (15) directed radially towards the exterior of said cell (3), defining a concavity tilted towards the rotation sense of said rotor (2).

5. Device for distributing seeds on the ground according to any one of the preceding claims, **characterized in that** said bottom wall (7) is provided with:
- a slide portion (16) that is tilted with respect to a line tangent to said rotor (2) by an angle comprised between 15° and 60° in order to allow an easy entrance of said dose of seeds;
- a collection portion (17) connected to said slide portion (16) by means of at least one bend in order to form said metering chamber (10) intended to contain the seeds.

6. Device for distributing seeds on the ground according to claim 5, **characterized in that** said bottom wall (7) also comprises an undercut portion (18) connected to said collection portion (17) by means of at least one bend in order to prevent the exit of said seeds from said metering chamber (10) of said cell (3).

7. Device for distributing seeds on the ground according to claim 2, **characterized in that** said spring (19) is of spiral type, and is provided with a terminal ring wound around an annular shoulder (20) projecting from an internal face (21) of said bottom wall (7) facing said end stop wall (11).

8. Device for distributing seeds on the ground according to claim 3, **characterized in that** said screw (13) is provided with a head (22) accessible from said metering chamber (10) and actuatable by means of an adjustment instrument, moving said screw (13) in said nut screw (14) in order to vary the volume of said metering chamber (10).

## Patentansprüche

1. Vorrichtung zum Verteilen von Saatgut, die Folgendes umfasst:
- einen Rotor (2), der rundum mit einer Vielzahl von in gleichem Abstand befindlichen Zellen (3), die geeignet sind, jeweils eine Dosis zu verteilendes Saatgut zu enthalten, ausgestattet ist;
- einen Stator (4), der außen um den genannten Rotor (2) positioniert und mit mindestens einer ersten Öffnung (5) zum zyklischen Versorgen der genannten Zellen (3) mit Saatgutdosen und mit einer zweiten Öffnung (6) zum Aufnehmen der genannten Saatgutdosen aus den genannten Zellen (3) und zyklischen Entladen derselben ausgestattet ist;
wobei die genannte Vorrichtung zum Verteilen **dadurch gekennzeichnet ist, dass sie** eine elastisch nachgiebig in das Innere der genannten Zelle (3) eingesetzte Bodenwand (7); zum Verbinden der genannten Bodenwand (7) mit dem genannten Rotor (2) vorgesehene Federelemente (8) umfasst, wobei die genannte Bodenwand (7) zusammen mit einer Seitenwand (9) der genannten Zelle (3) eine Dosierkammer (10) zum Enthalten des genannten Saatguts definiert.

2. Vorrichtung zum Verteilen von Saatgut auf dem Boden nach Anspruch 1, **dadurch gekennzeichnet, dass** die genannten Federelemente (8) eine zwischen der genannten Bodenwand (7) und einer der genannten Bodenwand (7) gegenüberliegenden Endanschlagwand (11) der genannten Zelle (3) eingefügte Feder (19) umfassen.

3. Vorrichtung zum Verteilen von Saatgut auf dem Boden nach Anspruch 2, **dadurch gekennzeichnet, dass** die genannte Bodenwand (7) mit einer von mindestens einer Schraube (13) überquerten durchgehenden Öffnung (12) ausgestattet ist, die mit einer auf der genannten Endanschlagwand (11) der genannten Zelle (3) angebrachten Schraubenmutter (14) verbunden ist, um die Tiefe der genannten Zelle (3) zu regulieren.

4. Vorrichtung zum Verteilen von Saatgut auf dem Boden nach einem beliebigen der vorangegangenen Ansprüche, **dadurch gekennzeichnet, dass** die genannte Bodenwand (7) mit einer radial zur Außenseite der genannten Zelle (3) gerichteten Außenfläche (15) ausgestattet ist und so eine in Drehrichtung des genannten Rotors (2) geneigte Konkavität definiert.

5. Vorrichtung zum Verteilen von Saatgut auf dem Boden nach einem beliebigen der vorangegangenen Ansprüche, **dadurch gekennzeichnet, dass** die genannte Bodenwand (7) mit Folgendem ausgestattet ist:
- einem Rutschenabschnitt (16), der im Verhältnis zu einer Tangente zu dem genannten Rotor (2) um einen Winkel zwischen 15° und 60° geneigt ist, um ein müheloses Eintreten der genannten Saatgutdosis zu gestatten;
- einem Sammelabschnitt (17), der mit dem genannten Rutschenabschnitt (16) mittels mindestens einer Biegung zum Bilden der zum Enthalten des Saatguts bestimmten genannten Dosierkammer (10) verbunden ist.

6. Vorrichtung zum Verteilen von Saatgut auf dem Boden nach Anspruch 5, **dadurch gekennzeichnet, dass** die genannte Bodenwand (7) außerdem einen mit dem genannten Sammelabschnitt (17) mit mindestens einer Biegung verbundenen hinterschnittenen Abschnitt (18) umfasst, um das Austreten des genannten Saatguts aus der genannten Dosierkammer (10) der genannten Zelle (3) zu verhindern.

7. Vorrichtung zum Verteilen von Saatgut auf dem Boden nach Anspruch 2, **dadurch gekennzeichnet, dass** die genannte Feder (19) des Typs mit Spirale und mit einem um ein von einer der genannten Endanschlagwand (11) gegenüberliegenden Innenseite (21) der genannten Bodenwand (7) vorstehendes ringförmiges Seitenteil (20) gewickelten Endring ausgestattet ist.

8. Vorrichtung zum Verteilen von Saatgut auf dem Boden nach Anspruch 3, **dadurch gekennzeichnet, dass** die genannte Schraube (13) mit einem von der genannten Dosierkammer (10) aus erreichbaren und mittels eines Einstellgeräts durch Bewegen der genannten Schraube (13) in der genannten Schraubenmutter (14) zu betätigenden Kopf (22) ausgestattet ist, um das Volumen der genannten Dosierkammer (10) zu ändern.

## Revendications

1. Dispositif de distribution de semences pour semeuse comprenant :
- un rotor (2) équipé, en périphérie, de plusieurs cellules (3) équidistantes entre elles, chacune propre à contenir des doses de semences à distribuer ;
- un stator (4) placé à l'extérieur dudit rotor (2) et doté d'au moins une première ouverture (5) pour alimenter en semences par doses apportées de façon cyclique lesdites cellules (3) et une deuxième ouverture (6) pour recevoir lesdites doses de semences en provenance desdites cellules (3) et les décharger par cycles ;
ledit dispositif de distribution **étant caractérisé en ce qu'**il comprend une paroi de fond (7) pouvant céder de façon élastique et disposée à l'intérieur de ladite cellule (3) ; des moyens élastiques (8) étant prévus pour relier ladite paroi du fond (7) audit rotor (2) ; ladite paroi de fond (7) définissant, avec une paroi latérale (9) de ladite cellule (3), une chambre de dosage (10) destinée à contenir les semences.

2. Dispositif de distribution de semences sur le terrain selon la revendication 1, **caractérisé en ce que** lesdits moyens élastiques (8) comprennent un ressort (19) interposé entre la paroi de fond (7) et une paroi de fin de course (11) dans ladite cellule (3) du côté opposé à ladite paroi de fond (7).

3. Dispositif de distribution de semences sur le terrain selon la revendication 2, **caractérisé en ce que** ladite paroi de fond (7) est dotée d'un trou passant (12) traversé par au moins une vis (13) engagée dans un écrou (14) dans la paroi de fin de course (11) de ladite cellule (3) afin de régler la profondeur de ladite cellule (3).

4. Dispositif de distribution de semences sur le terrain conforme à l'une ou l'autre des revendications précédentes, **caractérisé en ce que** ladite paroi de fond (7) est dotée d'une face externe (15) tournée dans le sens radial vers l'extérieur de ladite cellule (3) de façon à définir un espace concave vers le sens de rotation dudit rotor (2).

5. Dispositif de distribution de semences sur le terrain selon l'une ou l'autre des revendications précédentes, **caractérisé en ce que** ladite paroi de fond (7) est dotée de :
- une partie en chemin de glissière (16) inclinée par rapport à une tangente audit rotor (2) avec un angle compris entre 15° et 60° afin de faciliter l'entrée de ladite dose de semences ;
- une partie de collecte (17) rattachée à ladite partie en chemin de glissière (16) au moyen d'au moins un pli pour former ladite chambre de dosage (10) destinée à contenir les semences.

6. Dispositif de distribution de semences sur le terrain selon la revendication 5, **caractérisé en ce que** la paroi de fond (7) comprend par ailleurs une partie en contre-dépouille (18) rattachée à la partie de collecte (17) au moyen d'au moins un pli afin d'empêcher la sortie des semences de ladite chambre de dosage (10) de ladite cellule (3).

7. Dispositif de distribution de semences sur le terrain selon la revendication 2, **caractérisé en ce que** le ressort (19) est du type en spirale et est doté d'une bague terminale enroulée autour d'un épaulement annulaire (20) faisant saillie sur une façade interne (21) de la paroi de fond (7) face à la paroi de fin de course (11).

8. Dispositif de distribution de semences sur le terrain selon la revendication 3, **caractérisé en ce que** ladite vis (13) est dotée d'une tête (22) accessible à partir de la chambre de dosage (10) et actionnable au moyen d'un instrument de régulation en déplaçant la vis (13) dans l'écrou (14) pour modifier le volume de ladite chambre de dosage (10).
